# EUROPEAN PATENT SPECIFICATION

(11) **EP 3 399 891 B1**
(45) Date of publication and mention of the grant of the patent: **09.10.2019**
(21) Application number: 17700125.2
(22) Date of filing: 06.01.2017
(51) Int. Cl.: A47J 31/44

(54) **INFILTRATION-SAFE BEVERAGE MACHINE**
INFILTRATIONSSICHERE GETRÄNKEMASCHINE
MACHINE À BOISSONS ANTI-INFILTRATION

(30) Priority: 08.01.2016 WO PCT/US2016/012630
(43) Date of publication of application: 14.11.2018
(73) Proprietor: Société des Produits Nestlé S.A., 1800 Vevey (CH)
(72) Inventor: BRANKO, Lukic, Menlo Park California 94025 (US); CROZIER, Etienne, 2520 La Neuveville (CH); GUYON, Bertrand, 25160 Saint Point Lac (FR); KILPATRICK, Kevin, Mountain View California 94040 (US); MAGATTI, Marco, 1010 Lausanne (CH); OBLIGER, Nicolas, 25170 Franey (FR); RYUTARO TAKAYAMA, Steven, Menlo Park California 94025 (US); THULIEZ, Jean-Luc, 2525 Le Landeron (CH)
(74) Representative: Schnyder, Frank Simon
(86) International application number: PCT/EP2017/050238
(87) International publication number: WO 2017/118714

(56) References cited:
- WO-A1-2006/102980
- WO-A2-2009/038991
- WO-A2-2011/083103

## Description

### Field of the Invention

The field of the invention pertains to beverage preparation machines protected against infiltration of liquid draining on a surface supporting the machine, e.g. machines using capsules of an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage portion or a plurality of beverage portions.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Ingredient mixing modules, e.g. brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule. The actuation of the movable part of the brewing device may be manual as disclosed in WO 2009/043630, WO 01/15581, WO 02/43541, WO 2010/015427, WO 2010/128109, WO 2011/144719 and WO 2012/032019. Various handle configurations are disclosed in EP 1867260, WO 2005/004683, WO WO2007/135136, WO 2008/138710, WO 2009/074550, WO 2009/074553, WO 2009/074555, WO 2009/074557, WO 2009/074559, WO 2010/037806, WO 2011/042400, WO 2011/042401 and WO 2011/144720. Integrations of such arrangements into beverage machines are disclosed in WO 2009/074550, WO2011/144719, EP2014195046, EP2014195048 and EP2014195067. The actuation of the movable part of the brewing device may be motorized, as for example disclosed in EP 1 767 129, WO 2012/025258, WO 2012/025259 and WO 2013/127476.

A beverage machine typically includes a housing containing a beverage processing module and a water tank in fluid communication with the beverage processing module. Examples of such beverage machines are disclosed in EP 1 208 782, EP 1 267 687, EP 1 686 879, EP 1 731 065, EP 1 829 469, EP 1 864 598, EP 1 865 815, EP 1 867 260, EP 1 878 368, EP 2 222 210, EP 2 222 211, EP 2 222 212, EP 2 227 121, EP 2 227 122, US 2008/0006159, US 7,165,488, WO 2007/111884, WO 2009/074553, WO 2010/015427, WO 2011/089210 and WO 2012/055767. Usually the water tank is removable to be refilled by a user when empty. Some systems include a continuous water supply by connecting the beverage machine to the city water distribution network, as for instance disclosed in CN201076369, PCT/EP15/065409, PCT/EP15/065410, PCT/EP15/065411 and PCT/EP15/065414.

For safety reasons, the body of beverage machines should not rest directly onto an external support surface to avoid exposure of the bottom face of the beverage machines with water or other liquid possibly present on the external support surface (e.g. projected by or drained from the machine itself) and infiltration of the body by such water or other liquid via the bottom face. Hence, the body should be raised, e.g. by using rubber feet above the external surface to a height sufficient to avoid contact of the bottom with water or other liquid possibly present on the external surface. This increases the height of the machine for safety reasons.

### Summary of the Invention

The invention relates to a machine for preparing a beverage. The beverage preparation machine can be an in-home or out of home machine. The machine may be for the preparation of coffee, tea, chocolate, cacao, milk, soup, baby food, etc...

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage. Typically, a predetermined amount of beverage is formed and dispensed on user-request, which corresponds to a portion (e.g. a serving). The volume of such portion may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, cafe latte, americano coffees, teas, etc... In particular, a coffee machine may be configured for dispensing espressos, e.g. an adjustable volume of 20 to 60 ml per portion, and/or for dispensing lungos, e.g. a volume in the range of 70 to 150 ml per portion.

The machine has a body including a fluid line extending from a liquid inlet to a beverage outlet.

The fluid line may include at least one of: a liquid sensor, e.g. a flowmeter and/or a pressure sensor and/or a temperature sensor; a pump for driving a liquid from a or said source to the outlet, e.g. a solenoid pump (reciprocating piston pump) or a peristaltic pump or a diaphragm pump; and a thermal fluid conditioner such as a heater and/or a cooler.

The thermal conditioner may be a boiler or a thermoblock or an on demand heater (ODH), for instance an ODH type disclosed in EP 1 253 844, EP 1 380 243 and EP 1 809 151.

Examples of pumps and their incorporation into beverage machines are disclosed in WO 2009/150030, WO 2010/108700, WO 2011/107574 and WO 2013/098173.

The machine typically includes a control unit for controlling the fluid line to supply the beverage to the outlet.

The machine can have a user-interface connected to the control unit. Hence, a user can provide user-instructions to the control unit via the user-interface for operating the machine.

The beverage outlet is typically located above a placement location for a beverage recipient, e.g. a cup or a mug.

The placement location can be associated with a machine recipient support for supporting such user-recipient under the outlet. The support can be: associated with a drip tray e.g. a drip tray supporting the support; and/or movable relative to the housing vertically under the outlet and/or away from under the outlet for enabling a placement of user-recipients of different heights under the outlet. Examples of suitable recipient supports are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, EP 2014198712, EP 2014198710 and EP 2014198715.

The liquid source can be a liquid tank (or the tap water circuit) that has an outlet connected to the liquid inlet.

The machine has a bottom that has a periphery and at least one resilient member at the periphery of the bottom to form a vibration-dampening foot for placing such machine on an external support surface in an orientation for dispensing a beverage via the beverage outlet.

The external support surface may be a table or a shelf on which the machine is placed for dispensing beverages.

In accordance with the invention, the resilient member is water-repellent and extends generally along the periphery to prevent passage beyond the member of water-based liquid on the external support surface to underneath the bottom. The water-based liquid may be in the form of spills from the beverage outlet or from the liquid source.

The elongated water-resistant and resilient member thus forms a barrier against the passage of liquid to underneath the bottom.

Hence, when liquid is spilled on the external support surface around the machine, such as beverage e.g. residual beverage or liquid from another source near the beverage machine, this liquid is prevented from draining underneath the beverage machine and infiltrating the machine by the presence and configuration of the resilient member that is also water-repellent and forms a barrier against the passage of such liquid.

Depending on the circumstances and construction of the machine, the resilient member can be placed only along part of the bottom's periphery, e.g. under the beverage outlet and/or liquid source, or along the entire bottom's periphery.

The water-repellent and resilient member(s) can extend uninterruptedly on each side of the periphery below the beverage outlet.

The water-repellent and resilient member(s) may extends uninterruptedly on each side of the periphery below the liquid source, e.g. the liquid tank when present.

The resilient member(s) may be in a generally continuous configuration extending generally along the entire periphery or at least along a predominant part thereof. For instance, the member(s) extend(s) in an uninterrupted configuration along the entire periphery.

The resilient member(s) at the periphery of the bottom can be configured to space the bottom by no more than 2 mm over the external support surface at the resilient member(s).

A greater or smaller spacing may be provided between the bottom and the external support surface behind the resilient member(s). Typically, however, the spacing will be generally the same.

The resilient member(s) at the periphery of the bottom may be configured to space the bottom by no more than 1 mm, such as no more than 0.5 mm.

In an embodiment, the machine has an outside face extending along substantially the entire periphery and forming: at least one extremal side, e.g. a front side and/or a rear side; and at least two lateral sides extending from the extremal side(s); and at least one top side, such as lateral and extremal and top sides. The tank and the beverage outlet can be located at the same or different extremal sides. The member(s) may extend from under the extremal side(s) at which the tank and the outlet are located and may extend along and under the lateral sides that extend from the extremal sides(s). For instance, the sides are connected to each other by round or sharp angles, e.g. as mentioned below.

In an embodiment, the machine may include a carrier assembled to the body for carrying, as the source of liquid, the liquid tank. The carrier may be movable with the liquid tank as a unit inwards into the body into an operative position for supplying liquid to the liquid inlet and outwards from the body into a service position, such as a service position for filling the tank with liquid and/or cleaning the tank.

By moving the carrier with the liquid tank inwards into the body, the tank is better protected against external stresses or shocks, e.g. resulting from unwanted human movements, disturbing its supply of liquid to the fluid line or, worse, forcing the tank entirely out from the machine.

The liquid tank can be removable from the carrier in the service position, the outlet of the liquid tank being disconnectable from the liquid inlet. For instance, the tank has a connector for fastening the tank to the carrier, such as a connector for fastening mechanically and/or magnetically the tank to the carrier, e.g. a connector located about the outlet and spaced apart therefrom.

The liquid tank may have a handle for lifting the tank and/or for operating a lid of the tank between an open and a closed position. For instance, the handle is movable, e.g. pivotable, into a collapsed position for moving the carrier with the tank into the operative position and is movable, e.g. pivotable, into a deployed position for facilitating seizure of the handle when the carrier with the tank is in the service position.

The machine may have a waste collector for collecting waste material, such as waste ingredient from the fluid line and/or waste liquid from the fluid line. For instance, the waste collector is carried by the carrier so that the carrier is movable with the liquid tank and the waste collector as a unit inwards into the body into an operative position for collecting waste material and outwards from the body into a service position for emptying the waste collector.

The waste collector can be removable from the carrier in the service position.

The waste collector may be located adjacent to the liquid tank when carried by the carrier. For example, the waste collector is located between the liquid tank and the body when the carrier is in the service position.

The carrier can have a holding member holding the tank, and optionally a or the above waste collector. For instance, the holding member is generally shaped as an arm moving, e.g. sliding, inwards into and outwards from the machine's body.

When the machine includes the above waste collector and tank, such collector can either be connected to the tank (and follow the movement of the tank when lifted) and/or fitted with a lifting handle such as a handle that is movable between a collapsed position and a deployed position. When the collector is fitted with a lifting handle, the tank may also be fitted with a lifting handle (as discussed above) or may be connected to the collector (and follow the movement of the collector when lifted).

The carrier may have a holding member holding the tank, and optionally a (or the) waste collector. The holding member can be generally shaped as an arm moving, e.g. sliding, inwards into and outwards from the machine's body.

The liquid inlet of the body's fluid line may be fixed to the carrier, such as to a or the holding member holding the tank, and is movable with the carrier.

The body may delimit a seat, e.g. a cavity, for receiving the unit in the operative position. For instance, the carrier has an external panel or wall for covering the seat in the operative position.

When present, the carrier, the unit and/or the seat, can comprise or be associated with sensing arrangements, such as at least one of: a water presence or level sensor; waste presence or level sensor; cup presence or recognition sensor. Such sensors may then communicate with a control unit of the machine and trigger various functionalities, e.g. information to a user, allowing or preventing fluid processing, etc...

The body can have a main outside housing, the carrier (e.g. an or the above external panel or wall thereof) being generally flush with the outside housing in the operative position.

The body can have an ingredient inlet for supplying to the fluid line, e.g. to a mixing chamber comprised in the fluid line, a flavouring ingredient. For instance, the flavouring ingredient is supplied within a capsule to the fluid line.

A suitable mixing chamber may be formed by first and second parts that are relatively moved manually or by a motor e.g. as disclosed in EP 1767129, WO 2012/025258, WO 2012/025259, WO 2013/127476 and WO 2014/056641 and in the references cited above.

Such capsule may be of the type described above under the title "Field of the Invention" and/or the capsule may include an ingredient described under the same title.

The capsule can comprise a capsule body, e.g. a generally straight or tapered body. The capsule can have a circular peripheral annulus flange, e.g. a flexible or rigid flange, extending from a peripheral part, e.g. an edge or face, of the capsule body. The capsule may contain a flavoring ingredient for preparing tea, coffee, hot chocolate, cold chocolate, milk, soup or baby food.

Self-opening capsules are for instance disclosed in CH 605 293 and WO 03/059778.

The opening of capsules by a machine's piercing elements of a plate is for example disclosed in EP 512 470 and EP 2 068 684.

Examples of suitable mixing chambers are disclosed in WO 2008/037642 and WO 2013/026843.

A flavoured beverage may be prepared by circulating (by means of a liquid driver, e.g. a pump) a carrier liquid, such as water, into the capsule to flavour the liquid by exposure to a flavouring ingredient held in the capsule, e.g. along an extraction direction that may be generally parallel to the direction of relative movement of the first and second parts of the mixing chamber.

When closed capsules are used, the first and second parts may include a capsule opener such as blades and/or a tearing tool, e.g. a plate with a tearing profile, for instance as known from Nespresso™ machines or as disclosed in EP 0 512 470, EP 2 068 684 and WO 2014/076041 and the references cited therein.

The machine can include an ingredient supply gate that has an open configuration for allowing a transfer of the flavouring ingredient along the ingredient inlet to the fluid line and a closed configuration for preventing the transfer of the flavouring ingredient along the ingredient inlet to the fluid line.

For example, the gate incorporates an obstacle, such as one or more sliding and/or swing doors, deployed across the ingredient inlet in the closed configuration and at least partly retracted from across the ingredient inlet in the open configuration.

Such obstacle typically forms an ingredient holder, e.g. an ingredient capsule holder, for holding the ingredient prior to the transfer to the fluid line.

The capsule holder may have: a capsule holding configuration for holding an ingredient capsule away from the fluid line; and a capsule releasing configuration for releasing the capsule in or into the ingredient inlet towards the fluid line.

Immediately after releasing a capsule to the mixing chamber, the holder may be passed from the releasing configuration to the holding configuration so that the transfer channel is opened only when needed to release a capsule.

The holder can have a shape complementary to a shape of the capsule.

The holder may have an actuator for passing from the holding to the releasing configuration and vice versa, e.g. an actuator controlled by the control unit.

Details of suitable capsule holders are disclosed in WO 2012/126971, WO 2014/056641, WO 2014/056642 and WO 2015/086371.

The holder may have a capsule sensor for sensing a presence of a capsule on the capsule holder and optionally sensing a type of the capsule. The capsule holder can be controlled by the control unit to automatically release a sensed capsule when the mixing chamber is in the transfer position. When a particular type of capsule is identified, the control unit may adapt the control of the preparation unit of the beverage according to the identified type.

Details of suitable capsule sensing are disclosed in WO 2012/123440, WO 2014/147128, PCT/EP15/060555, PCT/EP15/060561, PCT/EP15/060567, PCT/EP15/065415 and PCT/EP15/065535.

The beverage outlet can be mounted in an outlet head of the body that is retractable into a rest position and that is deployable into a beverage dispensing position. The outlet head may have an external panel or wall that is generally flush with a or the above main outside housing of the body. Typically, the outlet head will be left in the rest position when the machine is switched-off or in a standby mode or otherwise not in use.

Exemplary outlet heads are described in PCT/US15/048691 and PCT/US15/48693.

In an embodiment, the opening of the body inlet is located on the outlet head, or on another retractable part, that is retracted in the body so as to hide the opening of the body when the body is in the inoperative mode. Examples of a retractable opening of a body inlet are disclosed in WO 2009/043630.

The machine may have an outside face that is user-visible when the machine is placed on the bottom. Hence, above the bottom, the outside face is not partly hidden by other machine elements to the user. Such outside face can extend along substantially the entire periphery.

The outside face delimits an opening of a body inlet for supplying to the fluid line, e.g. to a mixing chamber comprised in the fluid line, a flavouring ingredient. For instance, the flavouring ingredient is supplied within a capsule to the fluid line. The outside face extends all over the body from the periphery of the bottom to the opening of the body inlet over the bottom to confine the body. The outside face has outwardly protruding edges. The body has an operative mode for driving liquid from the inlet to the outlet and an inoperative mode when such machine is switched-off or in a standby mode. No outwardly protruding edge that is user-visible in the inoperative mode and confined within the outside face, has a radius of less than 5 mm, such as a radius of less than 10 mm, e.g. a radius of less than 20 mm, for instance a radius of less than 30 mm. Optionally, one or more outwardly protruding edges delimited by the outside face and the bottom at the periphery of the bottom and/or one or more outwardly protruding edges delimited by the outside face and the body inlet at the opening of the body inlet has a radius/radii of less than 5 mm, e.g. in the range of 0.1 to 3 mm. Such sharp edges can thus be provided at locations which are not likely to form a catch for an inattentive user.

Hence, at least when the machine of this embodiment is not in use for an extended period of time, i.e. switched-off or in a standby mode, the outside face is free of outwardly protruding sharp and catching edges between the periphery of the bottom and the opening of the body inlet. The machine's protruding edges that are located on the outside face in the inoperative mode are all rounded. Only at the bottom of the machine itself and/or at the opening of the body inlet sharper edges may be provided. It follows that the risk of a user getting unintentionally caught by a sharp machine edge, e.g. formed by a corner or a handle or an outlet or another machine part, upon contacting the machine without being minded to operate it, is significantly reduced or eliminated. It follows that the machine is less exposed of being unintentionally thrown over or down from the external support surface.

One or more outwardly protruding edges delimited by the outside face and the bottom at the periphery of the bottom and/or one or more outwardly protruding edges delimited by the outside face and the body inlet at the opening of the body inlet has no radius of less than 5 mm. Thus it is possible to avoid all sharp edges on the machine's body.

The user-visible outwardly protruding edges confined within the outside face (in the inoperative mode) can all be devoid of any radius of less than 10 mm, such as any radius of less than 20 mm, e.g. any radius of less than 30 mm.

The outside face can be generally convex and/or rounded.

The outside face may be free of outwardly protruding edges, such as sharp edges and/or catching edges.

The outside face can be made of: at least one extremal side, e.g. a front side and/or a rear side; at least two lateral sides extending from the extremal side(s); and at least one top side. For instance, the lateral and extremal and top sides are connected to each other by rounded angles, such as rounded angles having a minimal radius of at least 5 mm, e.g. in the range of 10 to 50 mm.

A "round angle" as mentioned above can have a minimal radius of at least 5 mm, e.g. in the range of 10 to 50 mm.

A "sharp angle" as mentioned above may have a maximum radius of 5 mm, e.g. in the range of 0.1 to 3 mm.

### Brief Description of the Drawings

The invention will now be described with reference to the schematic drawings, wherein:
- Figure 1 is a perspective view from the side of a machine according to the invention resting on an external support surface;
- Figure 2 is a perspective view from below the machine of Fig. 1 having a dispensing head in a deployed position;
- Figure 3 is a perspective view from above of the machine of Fig. 1 having a tank and collector carrier located between an operating position and a service position;
- Figs 4 and 5 are a perspective view from the side and from above, respectively, of the machine of Fig. 1 in which the carrier is in the service position with the liquid tank removed from the carrier;
- Figure 6 is a perspective view of the tank after removal from the carrier; and
- Figures 7 is a perspective view from below of the machine of Fig. 1 showing the bottom of the machine, an enlarged view of the bottom being shown in Fig. 8.

### Detailed description

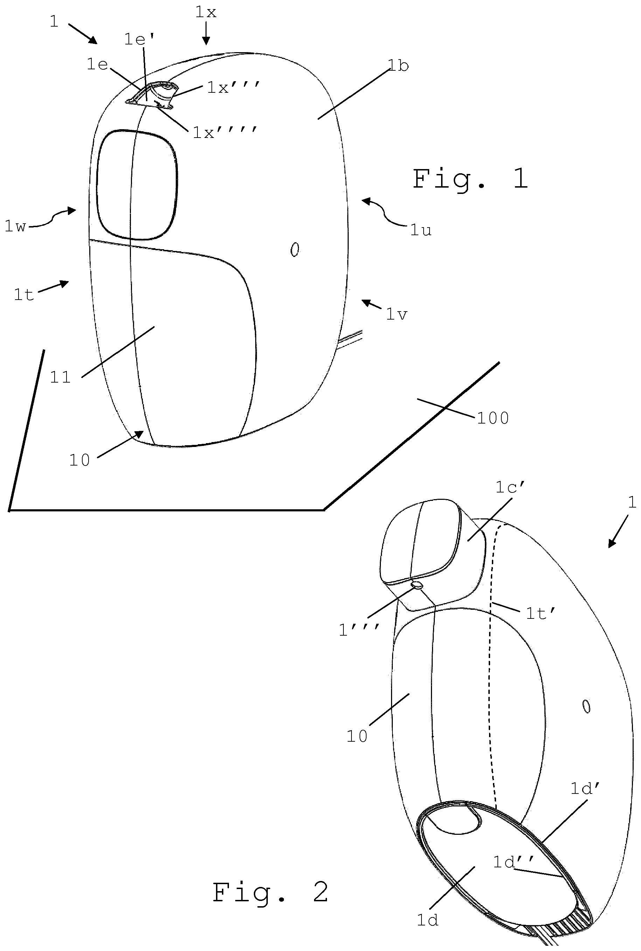

Figures 1 to 8 illustrate an exemplary embodiment of a beverage machine 1 in accordance with the invention.

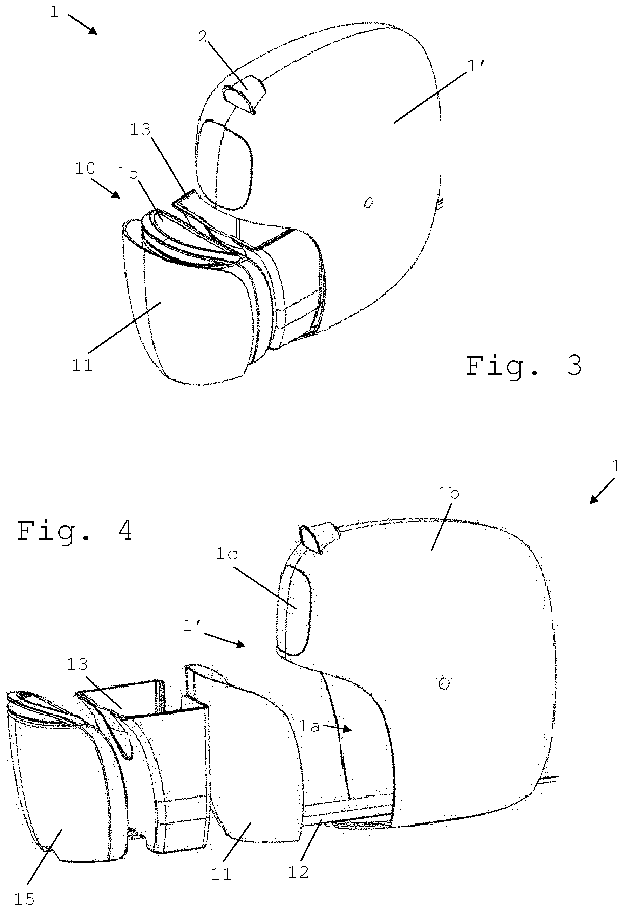

As illustrated in Figs 3 and 4, the ingredient may be supplied in the form of an ingredient capsule 2, e.g. of the type described above under the header "Field of the Invention".

Machine 1 has a body 1' comprising a fluid line 1",1'" extending from a beverage outlet 1"' to a liquid inlet 1" connected to a liquid source 15 having an outlet 16 connected to liquid inlet 1" . Liquid source 15 may be in the form of a liquid tank 15. See Figs 2, 3 and 5.

Machine 1 has a bottom 1d with a periphery 1d'. See Figs 2, 7 and 8.

Machine 1 includes at least one resilient member 1d" at periphery 1d' of bottom 1d to form a vibration-dampening foot for placing such machine 1 on an external support surface 100 in an orientation for dispensing a beverage via beverage outlet 1"'. See Figs 2, 7 and 8.

Resilient member 1d'' is water-repellent and extends generally along periphery 1d' to prevent water-based liquid from passing beyond member 1d" to underneath bottom 1d on external support surface 100. See Figs 2, 7 and 8.

The water-based liquid may be in the form of spills from beverage outlet 1''' or from liquid source 15.

Water-repellent and resilient member(s) 1d'' may extend uninterruptedly on each side of periphery 1d' below beverage outlet 1"'. See Figs 2, 7 and 8.

Water-repellent and resilient member 1d" can extend uninterruptedly on each side of periphery 1d' below liquid source 15, e.g. liquid tank 15. See Figs 2, 7 and 8.

Resilient member (s) 1d'' can be in a generally continuous configuration extending generally along the entire periphery 1d' or at least along a predominant part thereof, such as extending in an uninterrupted configuration along the entire periphery 1d'.

Resilient member(s) 1d'' at periphery 1d' of bottom 1d may be configured to space bottom 1d by no more than 2 mm over external support surface 100 at resilient member(s) 1d". Resilient member(s) 1d'' at periphery 1d' of bottom 1d can be configured to space bottom 1d by no more than 1 mm, such as no more than 0.5 mm. See Figs 2, 7 and 8.

Machine 1 may have an outside face 1b,1c,11,1t,1u,1v,1w,1x extending along substantially the entire periphery 1d' and forming at least one extremal side 1t,1u, e.g. a front side 1t and/or a rear side 1u, and at least two lateral sides 1v,1w extending from extremal side(s) 1t,1u, and at least one top side, such as lateral and extremal and top sides 1t,1u,1v,1w,1x. Tank 15 and the beverage outlet 1'" may be located at the same or different extremal sides 1t,1u and member(s) 1d" may extend from under extremal side(s) 1t,1u at which tank 15 and outlet 1'" are located and may extend along and under lateral sides 1v,1w that extend from extremal sides(s) 1t,1u. See Figs 1 to 5.

For instance, sides 1t,1u,1v,1w,1x are connected to each other by round or sharp angles, e.g. of the type mentioned below. See Fig. 1.

Machine 1 may include a carrier 11,12 assembled to body 1' for carrying, as the source of liquid 15, liquid tank 15. Carrier 11,12 can be movable with liquid tank 15 as a unit 10 inwards into body 1' into an operative position for supplying liquid to liquid inlet 1'' and outwards from body 1' into a service position, such as a service position for filling tank with liquid and/or cleaning the tank 15. See Figs 3 to 5.

Liquid tank 15 may be removable from carrier 11,12 in the service position, outlet 16 of liquid tank 15 being disconnectable from liquid inlet 1''. For instance, tank 15 comprises a connector 17 for fastening tank 15 to carrier 11,12, such as a connector 17 for fastening mechanically and/or magnetically tank 15 to carrier 11,12, e.g. a connector 17 located about outlet 16 and spaced apart therefrom. See Figs 4 to 6.

Liquid tank 15 can comprise a handle 18 for lifting tank 15 and/or for operating a lid 19 of tank 15 between an open and a closed position. For instance, handle 18 is movable, e.g. pivotable, into a collapsed position for moving carrier 11,12 with tank 15 into the operative position and is movable, e.g. pivotable, into a deployed position for facilitating seizure of handle 18 when carrier 11,12 with tank 15 is in the service position. See Figs 3 to 6.

Machine 1 may have a waste collector 13 for collecting waste material, such as waste ingredient from the fluid line and/or waste liquid from the fluid line, waste collector 13 being carried by carrier 11,12 so that carrier 11,12 is movable with liquid tank 15 and waste collector 13 as a unit 10 inwards into body 1' into an operative position for collecting waste material and outwards from body 1' into a service position for emptying waste collector 13. See Fig. 4.

Waste collector 13 can be removable from carrier 11,12 in the service position. See Fig. 4

Waste collector 13 can be located adjacent to liquid tank 15 when carried by carrier 11,12. For instance, collector 13 is located between liquid tank 15 and body 1' when carrier 11,12 is in the service position. See Fig. 3.

Carrier 11,12 may include a holding member 12 holding tank 15, and optionally a or the above waste collector 13. For instance, holding member 12 is generally shaped as an arm moving, e.g. sliding, inwards into and outwards from machine's body 1'. See Fig. 3 to 5.

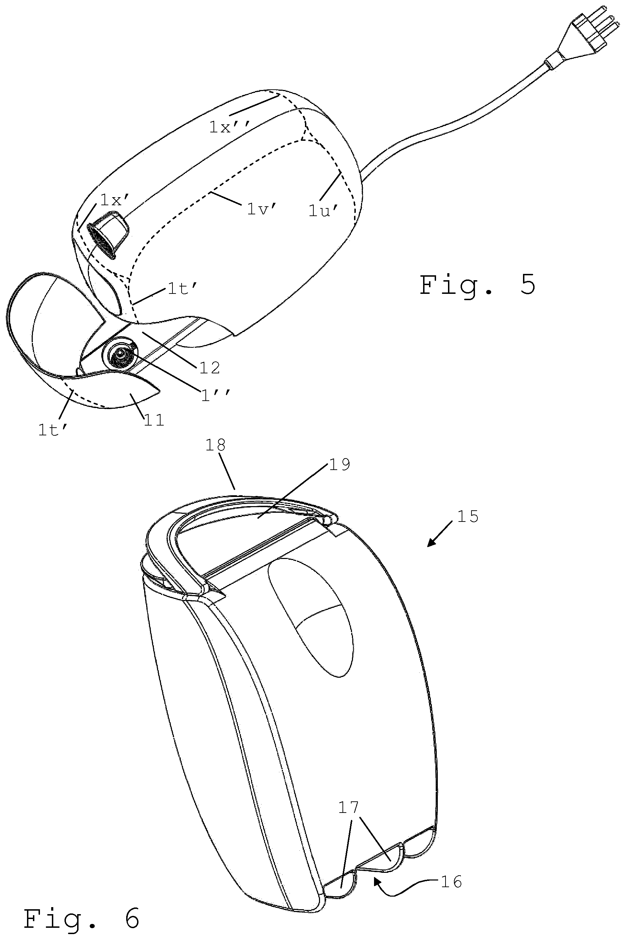

Liquid inlet 1" of the body's fluid line 1" ,1'" may be fixed to carrier 11,12, such as to a or the above holding member 12 holding tank 15, and may be movable with the carrier 11,12. See Figs 5 and 6.

Body 1' may delimit a seat 1a, e.g. a cavity 1a, for receiving unit 10 in the operative position. For instance, carrier 11,12 comprising optionally an external panel or wall 11 for covering seat 1a in the operative position. See Figs 2 and 3.

Body 1' can have a main outside housing 1b, carrier 11,12, e.g. an or the above external panel or wall 11 of carrier 11,12, being generally flush with outside housing 1b in the operative position. See Figs 2 and 3.

Body 1' may have an ingredient inlet 1e for supplying to fluid line 1",1"', e.g. to a mixing chamber comprised in fluid line, a flavouring ingredient, e.g. a flavouring ingredient supplied within a capsule 2. For instance, such machine 1 has an ingredient supply gate 1e' that has an open configuration for allowing a transfer of the flavouring ingredient along ingredient inlet 1e to fluid line 1'',1''' and a closed configuration for preventing the transfer of the flavouring ingredient along ingredient inlet 1e to fluid line 1" ,1" '. For example, the gate includes an obstacle 1e', such as one or more sliding and/or swing doors, deployed across ingredient inlet 1e in the closed configuration and at least partly retracted from across ingredient inlet 1e in the open configuration. Typically, the obstacle forms an ingredient holder, e.g. an ingredient capsule holder, for holding the ingredient prior to the transfer to fluid line 1" ,1"'. See Figs 1 and 3.

Beverage outlet 1''' may be mounted in an outlet head 1c' of body 1' that is retractable into a rest position and is deployable into a beverage dispensing position. Optionally, outlet head 1c' has an external panel or wall 1c that is generally flush with a or the main outside housing 1b of body 1'. See Figs 1 and 2.

Machine 1 may have an outside face 1b,1c,11,1t,1u,1v, 1w,1x that is user-visible when machine 1 is placed on bottom 1d. Outside face 1b,1c,11,1t,1u,1v,1w,1x can extends along substantially the entire periphery 1d'.

Outside face 1b,1c,11,1t,1u,1v,1w,1x may delimit an opening of a body inlet 1e for supplying to fluid line 1",1"', e.g. to a mixing chamber comprised in the fluid line, a flavouring ingredient. The flavouring ingredient may be supplied within a capsule 2 to the fluid line. See Figs 1, 3 and 7.

Body 1' can have an operative mode for driving liquid from inlet 1" to outlet 1'"and an inoperative mode when such machine 1 is switched-off or in a standby mode.

For instance, no outwardly protruding edge 1t',1u',1v',1w', 1x" that is user-visible in the inoperative mode and that is confined within outside face 1b,1c,11,1t,1u,1v, 1w,1x, has a radius of less than 5 mm, such as a radius of less than 10 mm, e.g. a radius of less than 20 mm, for instance a radius of less than 30 mm.

Optionally one or more outwardly protruding edges 1v",1w" delimited by outside face 1b,1c,11,1t,1u,1v, 1w,1x and bottom 1d at periphery 1d' of bottom 1d and/or one or more outwardly protruding edges 1x"',1x"" delimited by outside face 1b,1c,11 and body inlet 1e at the opening of the body inlet 1e has/have radii of less than 5 mm, e.g. in the range of 0.1 to 3 mm.

Face 1b,1c,11,1t,1u,1v,1w,1x can extend all over body 1' from periphery 1d' of bottom 1d to the opening of body inlet 1e over bottom 1d to confine body 1'.

Face 1b,1c,11,1t,1u,1v,1w,1x can have outwardly protruding edges 1t',1u',1v',1x', 1x".

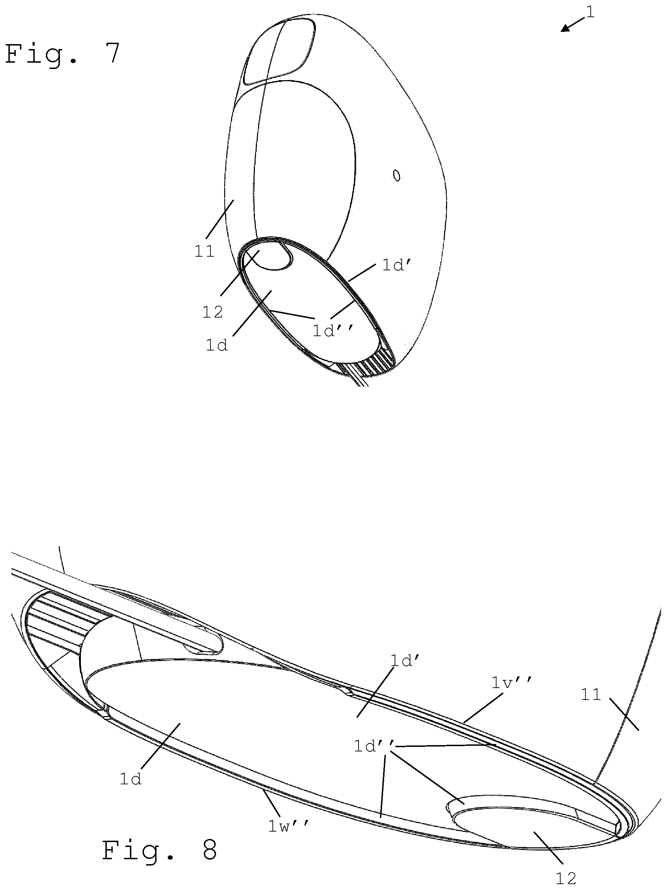

Outside face 1b,1c,11,1t,1u,1v,1w,1x may be made of: at least one extremal side 1t,1u, e.g. a front side It and/or a rear side 1u; at least two lateral sides 1v,1w extending from extremal side(s) 1t,1u; and at least one top side 1x. For instance, lateral and extremal and top sides 1t,1u,1v,1w,1x are connected to each other by rounded angles. See Figs 1 and 7.

A round angle can have a minimal radius of at least 5 mm, e.g. in the range of 10 to 50 mm.

A sharp angle may have a maximum radius of 5 mm, e.g. in the range of 0.1 to 3 mm.

## Claims

1. A machine (1) for preparing a beverage comprising:
- a body (1') comprising a fluid line (1'',1''') extending from a beverage outlet (1''') to a liquid inlet (1") connected to a liquid source (15), e.g. a liquid tank (15) that has an outlet (16) connected to the liquid inlet, to;
- a bottom (1d) that has a periphery (1d'); and
- at least one resilient member (1d") at the periphery (1d') of the bottom (1d) to form a vibration-dampening foot for placing such machine (1) on an external support surface (100) in an orientation for dispensing a beverage via the beverage outlet (1'''),
**characterised in that** said resilient member (1d") is water-repellent and extends generally along the periphery (1d') to prevent passage beyond the member (1d") of water-based liquid on said external support surface (100) to underneath the bottom (1d), such as water-based liquid in the form of spills from the beverage outlet (1''') or from the liquid source (15).

2. The machine of claim 1, wherein the water-repellent and resilient member(s) (1d") extend(s) uninterruptedly on each side of the periphery (1d') below the beverage outlet (1''').

3. The machine of claim 1 or 2, wherein the water-repellent and resilient member(s) (1d'') extend(s) uninterruptedly on each side of the periphery (1d') below the liquid source (15), e.g. said liquid tank (15).

4. The machine of any preceding claim, wherein the resilient member(s) (1d") is/are in a generally continuous configuration extending generally along the entire periphery (1d') or at least along a predominant part thereof, such as extending in an uninterrupted configuration along the entire periphery (1d').

5. The machine of any preceding claim, wherein the resilient member(s) (1d") at the periphery (1d') of the bottom (1d) is configured to space the bottom (1d) by no more than 2 mm over said external support surface (100) at the resilient member (s) (1d").

6. The machine of claim 5, wherein the resilient member(s) (1d'') at the periphery (1d') of the bottom (1d) is configured to space the bottom (1d) by no more than 1, such as no more than 0.5 mm.

7. The machine of any preceding claim, which comprises an outside face (1b,1c,11,1t,1u,1v,1w,1x) extending along substantially the entire periphery (1d') and forming:
- at least one extremal side (1t,1u), e.g. a front side (1t) and/or a rear side (1u); and/or
- at least two lateral sides (1v,1w) extending from the extremal side(s) (1t,1u); and/or
- at least one top side (1x),
such as lateral and extremal and top sides (1t,1u,1v,1w,1x), the tank (15) and the beverage outlet (1''') being located at the same or different extremal sides (1t,1u) and the member(s) (1d'') extending from under the extremal side(s) (1t,1u) at which the tank (15) and the outlet (1''') are located and extending along and under the lateral sides (1v,1w) that extend from said extremal sides (s) (1t,1u), optionally the sides (1t,1u,1v,1w,1x) being connected to each other by round or sharp angles:
- said round angle having a minimal radius of at least 5 mm, e.g. in the range of 10 to 50 mm; and
- said sharp angle having a maximum radius of 5 mm, e.g. in the range of 0.1 to 3 mm.

8. The machine of any preceding claim, which comprises a carrier (11,12) assembled to the body (1') for carrying, as the source of liquid (15), said liquid tank (15), the carrier (11,12) being movable with the liquid tank (15) as a unit (10) inwards into the body (1') into an operative position for supplying liquid to the liquid inlet (1") and outwards from the body (1') into a service position, such as a service position for filling the tank (15) with liquid and/or cleaning the tank (15), optionally the liquid tank (15):
- being removable from the carrier (11,12) in the service position, the outlet (16) of the liquid tank (15) being disconnectable from the liquid inlet (1"), the tank (15) comprising for instance a connector (17) for fastening the tank to the carrier (11,12), such as a connector (17) for fastening mechanically and/or magnetically the tank to the carrier (11,12), e.g. a connector (17) located about the outlet (16) and spaced apart therefrom; and/or
- comprising a handle (18) for lifting the tank (15) and/or for operating a lid (19) of the tank (15) between an open and a closed position, optionally the handle (18) being movable, e.g. pivotable, into a collapsed position for moving the carrier (11,12) with the tank (15) into the operative position and being movable, e.g. pivotable, into a deployed position for facilitating seizure of the handle when the carrier (11,12) with the tank is in the service position.

9. The machine of claim 8, which comprises a waste collector (13) for collecting waste material, such as waste ingredient from the fluid line and/or waste liquid from the fluid line, the waste collector (13) being carried by the carrier (11,12) so that the carrier (11,12) is movable with the liquid tank (15) and the waste collector (13) as a unit (10) inwards into the body (1') into an operative position for collecting waste material and outwards from the body (1') into a service position for emptying the waste collector (13), for instance the waste collector (13) being:
- removable from the carrier (11,12) in the service position; and/or
- located adjacent to the liquid tank (15) when carried by the carrier (11,12), such as located between the liquid tank (15) and the body (1') when the carrier (11,12) is in the service position.

10. The machine of claim 8 or 9, wherein the carrier (11,12) comprises a holding member (12) holding the tank (15), and optionally a or said waste collector (13), the holding member (12) being for instance generally shaped as an arm moving, e.g. sliding, inwards into and outwards from the machine's body (1').

11. The machine of one of claims 8 to 10, wherein the liquid inlet (1") of the body's fluid line (1",1"') is fixed to the carrier (11,12), such as to a or said holding member (12) holding the tank (15), and is movable with the carrier (11,12).

12. The machine of any one of claims 8 to 11, wherein the body (1'):
- delimits a seat (1a), e.g. a cavity (1a), for receiving the unit (10) in the operative position, optionally the carrier (11,12) comprising an external panel or wall (11) for covering the seat (1a) in the operative position; and/or
- comprises a main outside housing (1b), the carrier, e.g. an or said external panel or wall (11), being generally flush with the outside housing (1b) in the operative position.

13. The machine of any preceding claim, wherein the body (1') has an ingredient inlet (1e) for supplying to the fluid line (1'',1'''), e.g. to a mixing chamber comprised in the fluid line, a flavouring ingredient, e.g. a flavouring ingredient supplied within a capsule (2), optionally such machine (1) comprising an ingredient supply gate (1e') that has an open configuration for allowing a transfer of the flavouring ingredient along the ingredient inlet (1e) to the fluid line (1'',1''') and a closed configuration for preventing the transfer of the flavouring ingredient along the ingredient inlet (1e) to the fluid line (1",1"'), for instance the gate including an obstacle (1e'), such as one or more sliding and/or swing doors, deployed across the ingredient inlet (1e) in the closed configuration and at least partly retracted from across the ingredient inlet (1e) in the open configuration, said obstacle forming typically an ingredient holder, e.g. an ingredient capsule holder, for holding said ingredient prior to the transfer to the fluid line (1",1"').

14. The machine of any preceding claim, wherein the beverage outlet (1''') is mounted in an outlet head (1c') of the body (1') that is retractable into a rest position and is deployable into a beverage dispensing position, the outlet head (1c') having optionally an external panel or wall (1c) that is generally flush with a or said main outside housing (1b) of the body (1').

15. The machine of any preceding claim, which comprises an outside face (1b,1c,11,1t,1u,1v,1w,1x) that is user-visible when said machine (1) is placed on the bottom (1d), the outside face (1b,1c,11,1t,1u,1v,1w,1x) extending along substantially the entire periphery (1d'), for instance the outside face (1b,1c,11,1t,1u,1v,1w,1x):
- delimiting an opening of a body inlet (1e) for supplying to the fluid line (1",1"'), e.g. a mixing chamber comprised in the fluid line, a flavouring ingredient, e.g. a flavouring ingredient supplied within a capsule (2) to the fluid line;
- extending all over the body (1') from the periphery (1d') of the bottom (1d) to the opening of the body inlet (1e) over the bottom to confine the body (1'); and
- having outwardly protruding edges (1t',1u',1v',1x', 1x"), the body (1') having an operative mode for driving liquid from the inlet (1") to the outlet (1''') and an inoperative mode when such machine (1) is switched-off or in a standby mode, no outwardly protruding edge (1t',1u',1v',1w',1x'') that is user-visible in the inoperative mode and that is confined within the outside face (1b,1c,11,1t,1u,1v, 1w,1x), having a radius of less than 5 mm, such as a radius of less than 10 mm, e.g. a radius of less than 20 mm, for instance a radius of less than 30 mm,
optionally one or more outwardly protruding edges (1v" ,1w") delimited by the outside face (1b,1c,11,1t, 1u,1v,1w,1x) and the bottom (1d) at the periphery (1d') of the bottom (1d) and/or one or more outwardly protruding edges (1x"',1x"") delimited by the outside face (1b,1c,11) and the body inlet (1e) at the opening of the body inlet (1e) has/have radii of less than 5 mm, e.g. in the range of 0.1 to 3 mm

## Patentansprüche

1. Maschine (1) zur Zubereitung eines Getränks, umfassend:
- einen Körper (1'), umfassend eine Fluidleitung (1", 1"'), die sich von einem Getränkeauslass (1'") zu einem mit einer Flüssigkeitsquelle (15) verbundenen Flüssigkeitseinlass (1") erstreckt, z. B. zu einem Flüssigkeitstank (15) erstreckt, der einen mit dem Flüssigkeitseinlass verbundenen Auslass (16) aufweist,
- einen Boden (1d), der einen Umfang (1d') aufweist; und
- mindestens ein elastisches Element (1d") an dem Umfang (1d') des Bodens (1d) zur Bildung eines Schwingungsdämpfungsfußes zum Anordnen einer solchen Maschine (1) auf einer externen Auflagefläche (100) in einer Ausrichtung zum Ausgeben eines Getränks über den Getränkeauslass (1"'),
**dadurch gekennzeichnet, dass** das elastische Element (1d") wasserabweisend ist und sich im Allgemeinen entlang des Umfangs (1d') erstreckt, um den Durchgang von wasserbasierender Flüssigkeit über das Element (1d") hinaus auf die externe Auflagefläche (100) bis unterhalb des Bodens (1d) zu verhindern, wie beispielsweise wasserbasierende Flüssigkeit in Form von Spritzern aus dem Getränkeauslass (1"') oder aus der Flüssigkeitsquelle (15).

2. Maschine nach Anspruch 1, wobei sich das/die wasserabweisende(n), elastische(n) Element(e) (1d") ununterbrochen auf jeder Seite des Umfangs (1d') unterhalb des Getränkeauslasses (1"') erstreckt/erstrecken.

3. Maschine nach Anspruch 1 oder 2, wobei sich das/die wasserabweisende(n), elastische(n) Element(e) (1d") ununterbrochen auf jeder Seite des Umfangs (1d') unterhalb der Flüssigkeitsquelle (15), z. B. des Flüssigkeitstanks (15), erstreckt/erstrecken.

4. Maschine nach einem der vorstehenden Ansprüche, wobei das/die elastische(n) Element(e) (1d") in einer im Allgemeinen kontinuierlichen Konfiguration sich im Allgemeinen entlang des gesamten Umfangs (1d') oder mindestens entlang eines überwiegenden Teils davon erstreckt/erstrecken, wie beispielsweise in einer ununterbrochenen Konfiguration entlang des gesamten Umfangs (1d').

5. Maschine nach einem der vorstehenden Ansprüche, wobei das/die elastische(n) Element(e) (1d") am Umfang (1d') des Bodens (1d) so konfiguriert ist/sind, dass es/sie den Boden (1d) um nicht mehr als 2 mm über die externen Auflagefläche (100) an dem/den elastischen Element(en) (1d") beabstandet/beabstanden.

6. Maschine nach Anspruch 5, wobei das/die elastischen Element(e) (1d") am Umfang (1d') des Bodens (1d) konfiguriert ist/sind, dass es/sie den Boden (1d) um nicht mehr als 1, beispielsweise nicht mehr als 0,5 mm, beabstandet/beabstanden.

7. Maschine nach einem der vorstehenden Ansprüche, die eine Außenseite (1b, 1c, 11, 1t, 1u, 1v, 1w, 1x) umfasst, die sich im Wesentlichen über den gesamten Umfang (1d') erstreckt und Folgendes bildet:
- mindestens eine Extremalseite (1t, 1u), z. B. eine Vorderseite (1t) und/oder eine Hinterseite (1u); und/oder
- mindestens zwei seitliche Seiten (1v, 1w), die sich von der/den Extremseite(n) (1t, 1u) erstrecken; und/oder
- mindestens eine Oberseite (1x),
wie beispielsweise seitliche Seiten und Extremalseiten und Oberseiten (1t, 1u, 1v, 1w, 1x), wobei der Tank (15) und der Getränkeauslass (1"') sich an gleichen oder unterschiedlichen Extremseiten (1t, 1u) befinden und das/die Element(e) (1d") sich von unterhalb der Extremseite(n) (1t, 1u), an der/denen der Tank (15) und der Auslass (1'") angeordnet sind, entlang und unterhalb der seitlichen Seiten (1v, 1w) erstrecken, die sich von der/den Extremseite(n) (1t, 1u) erstrecken, wobei wahlweise die Seiten (1t, 1u, 1v, 1w, 1x) durch runde oder spitze Winkel miteinander verbunden sind:
- wobei der runde Winkel einen minimalen Radius von mindestens 5 mm, z. B. im Bereich von 10 bis 50 mm, aufweist; und
- der spitze Winkel einen maximalen Radius von 5 mm, z. B. im Bereich von 0,1 bis 3 mm aufweist.

8. Maschine nach einem der vorstehenden Ansprüche, die einen Träger (11, 12) umfasst, der an dem Körper (1') zum Tragen des Flüssigkeitstanks (15) als Flüssigkeitsquelle (15) angeordnet ist, wobei der Träger (11, 12) mit dem Flüssigkeitstank (15) als eine Einheit (10) nach innen in den Körper (1') in eine Betriebsposition zum Zuführen von Flüssigkeit zum Flüssigkeitseinlass (1") und nach außen aus dem Körper (1') in eine Wartungsposition, wie beispielsweise eine Wartungsposition zum Befüllen des Tanks (15) mit Flüssigkeit und/oder zur Reinigung der Tanks (15), bewegbar ist, wobei wahlweise der Flüssigkeitstank (15):
- von dem Träger (11, 12) in der Wartungsposition entfernbar ist, wobei der Auslass (16) des Flüssigkeitstanks (15) von dem Flüssigkeitseinlass (1") trennbar ist, wobei der Tank (15) zum Beispiel einen Verbinder (17) zur Befestigung des Tanks an dem Träger (11, 12), wie beispielsweise einen Verbinder (17), zur mechanischen und/oder magnetischen Befestigung des Tanks an dem Träger (11, 12), umfasst, z. B. einen Verbinder (17), der um den Auslass (16) herum und beabstandet davon angeordnet ist; und/oder
- umfassend einen Griff (18) zum Anheben des Tanks (15) und/oder zum Betätigen eines Deckels (19) des Tanks (15) zwischen einer offenen und einer geschlossenen Position, wobei der Griff (18) wahlweise beweglich ist, z. B. schwenkbar, in eine zusammengeklappte Position zum Bewegen des Trägers (11, 12) mit dem Tank (15) in die Betriebsposition und, z. B. schwenkbar, in eine ausgefahrene Position zum leichteren Erfassen des Handgriffs, wenn der Träger (11, 12) mit dem Tank sich in der Wartungsposition befindet.

9. Maschine nach Anspruch 8, welche einen Abfallsammler (13) zum Sammeln von Abfallmaterial umfasst, wie beispielsweise verbrauchte Bestandteile aus der Fluidleitung und/oder verbrauchte Flüssigkeit aus der Fluidleitung, wobei der Abfallsammler (13) von dem Träger (11, 12) getragen wird, sodass der Träger (11, 12) mit dem Flüssigkeitstank (15) und dem Abfallsammler (13) als eine Einheit (10) nach innen in den Körper (1') in eine Betriebsposition zum Sammeln von Abfallmaterial und nach außen aus dem Körper (1') in eine Wartungsposition zum Entleeren des Abfallsammlers (13) beweglich ist, wobei der Abfallsammler (13) zum Beispiel:
- von dem Träger (11, 12) in der Wartungsposition entfernbar ist; und/oder
- benachbart zu dem Flüssigkeitstank (15) angeordnet ist, wenn er von dem Träger (11, 12) getragen wird, beispielsweise zwischen dem Flüssigkeitstank (15) und dem Körper (1') angeordnet ist, wenn der Träger (11, 12) sich in der Wartungsposition befindet.

10. Maschine nach Anspruch 8 oder 9, wobei der Träger (11, 12) ein Halteelement (12) zum Halten des Tanks (15) und wahlweise einen oder den Abfallsammler (13) umfasst, wobei das Halteelement (12), das zum Beispiel im Allgemeinen als ein sich bewegender, z. B. verschiebbarer, nach innen in den und nach außen aus dem Körper (1') der Maschine gleitender Arm geformt ist.

11. Maschine nach einem der Ansprüche 8 bis 10, wobei der Flüssigkeitseinlass (1") der Fluidleitung (1", 1"') des Körpers an dem Träger (11, 12) befestigt ist, beispielsweise an einem oder dem Halteelement (12) zum Halten des Tanks (15), und mit dem Träger (11, 12) beweglich ist.

12. Maschine nach einem der Ansprüche 8 bis 11, wobei der Körper (1'):
- einen Sitz (1a), z. B. einen Hohlraum (1a), zur Aufnahme der Einheit (10) in der Betriebsposition begrenzt, wobei wahlweise der Träger (11, 12) eine externe Platte oder Wand (11) zur Abdeckung des Sitzes (1a) in der Betriebsposition umfasst; und/oder
- ein Hauptaußengehäuse (1b) umfasst, wobei der Träger, z. B. eine oder die externe Platte oder Wand (11), in der Betriebsposition im Allgemeinen bündig mit dem Außengehäuse (1b) ist.

13. Maschine nach einem der vorstehenden Ansprüche, wobei der Körper (1') einen Bestandteileinlass (1e) zur Zuführung in die Fluidleitung (1", 1"'), z. B. in eine in der Fluidleitung enthaltene Mischkammer, eines Aromastoffbestandteils, z. B. eines in einer Kapsel (2) zugeführten Aromastoffbestandteils, aufweist, wobei eine derartige Maschine (1) wahlweise ein Bestandteilzufuhrtor (1e') umfasst, das eine offene Konfiguration zur Ermöglichung einer Übertragung des Aromastoffbestandteils entlang des Bestandteileinlasses (1e) in die Fluidleitung (1", 1"') aufweist, und eine geschlossene Konfiguration zur Verhinderung der Übertragung des Aromastoffbestandteils entlang des Bestandteileinlasses (1e) in die Fluidleitung (1", 1'''), wobei zum Beispiel das Tor ein Hindernis (1e'), wie beispielsweise eine oder mehrere verschiebbare und/oder schwenkbare Türen, einschließt, die über den Bestandteileinlass (1e) in der geschlossenen Position ausgefahren sind und in der offenen Konfiguration mindestens teilweise über den Bestandteileinlass (1e) zurückgezogen sind, wobei das Hindernis üblicherweise einen Bestandteilhalter, z. B. einen Bestandteilkapselhalter, zum Halten des Bestandteils vor der Übertragung in die Fluidleitung (1", 1"') bildet.

14. Maschine nach einem der vorstehenden Ansprüche, wobei der Getränkeauslass (1'") in einem Auslasskopf (1c') des Körpers (1') eingebaut ist, der in eine Ruheposition zurückziehbar ist und in einer Getränkeausgabeposition ausfahrbar ist, wobei der Auslasskopf (1c') wahlweise eine externe Platte oder Wand (1c) aufweist, die im Allgemeinen bündig mit einem oder dem Hauptaußengehäuse (1b) des Körpers (1') ist.

15. Maschine nach einem der vorstehenden Ansprüche, die eine Außenseite (1b, 1c, 11, 1t, 1u, 1v, 1w, 1x) umfasst, die für den Benutzer sichtbar ist, wenn die Maschine (1) auf dem Boden (1d) angeordnet ist, wobei die Außenseite (1b, 1c, 11, 1t, 1u, 1v, 1w, 1x) sich im Wesentlichen entlang des gesamten Umfangs (1d') erstreckt, wobei zum Beispiel die Außenseite (1b, 1c, 11, 1t, 1u, 1v, 1w, 1x):
- eine Öffnung eines Körpereinlasses (1e) zur Zuführung in die Fluidleitung (1", 1'"), z. B. eine in der Fluidleitung enthaltene Mischkammer, eines Aromastoffbestandteils begrenzt, z. B. eines Aromastoffbestandteils, der in einer Kapsel (2) in die Fluidleitung zugeführt wird;
- sich über den gesamten Körper (1') vom Umfang (1d') des Bodens (1d) bis zur Öffnung des Körpereinlasses (1e) über den Boden erstreckt, um den Körper (1') zu begrenzen; und
- nach außen vorstehende Kanten (1t', 1u', 1v', 1x', 1x") aufweist,
wobei der Körper (1') einen Betriebsmodus zum Antreiben von Flüssigkeit aus dem Einlass (1") zu dem Auslass (1"') und einen Ruhemodus aufweist, wenn eine solche Maschine (1) ausgeschaltet ist oder sich in einem Bereitschaftsmodus befindet, keine nach außen vorstehende Kante (1t', 1u', 1v', 1w', 1x") aufweist, die im Ruhemodus für den Benutzer sichtbar und innerhalb der Außenseite (1b, 1c, 11, 1t, 1u, 1v, 1w, 1x) begrenzt ist, mit einem Radius von weniger als 5 mm, beispielsweise einem Radius von weniger als 10 mm, beispielsweise einem Radius von weniger als 20 mm, zum Beispiel einem Radius von weniger als 30 mm,
wahlweise eine oder mehrere nach außen vorstehende Kanten (1v", 1w"), die durch die Außenseite (1b, 1c, 11, 1t, 1u, 1v, 1w, 1x) und den Boden (1d) am Umfang (1d') des Bodens (1d) begrenzt sind, und/oder eine oder mehrere nach außen vorstehende Kanten (1x"', 1x""), die durch die Außenseite (1b, 1c, 11) begrenzt sind, aufweist, und der Körpereinlass (1e) an der Öffnung des Körpereinlasses (1e) Radien von weniger als 5 mm, beispielsweise im Bereich von 0,1 bis 3 mm aufweist.

## Revendications

1. Machine (1) de préparation d'une boisson comprenant :
- un corps (1') comprenant un conduit de fluide (1", 1"') s'étendant d'une sortie de boisson (1"') vers une entrée de liquide (1") raccordée à une source de liquide (15), par ex. un réservoir à liquide (15) qui présente une sortie (16) raccordée à l'entrée de liquide ;
- un fond (1d) qui a une périphérie (1d') ; et
- au moins un élément élastique (1d") à la périphérie (1d') du fond (1d) pour former un pied d'amortissement de vibrations pour placer une telle machine (1) sur une surface de support externe (100) dans une orientation permettant une distribution d'une boisson par l'intermédiaire de la sortie de boisson (1"'),
**caractérisée en ce que** ledit élément élastique (1d") est hydrofuge et s'étend généralement le long de la périphérie (1d') pour empêcher le passage au-delà de l'élément (1d") de liquides à base d'eau sur ladite surface de support externe (100) vers le bas du fond (1d), tel qu'un liquide à base d'eau sous la forme de déversements depuis la sortie de boisson (1"') ou à partir de la source de liquide (15).

2. Machine selon la revendication 1, dans laquelle le ou les éléments élastiques hydrofuges (1d") s'étendent de manière ininterrompue sur chaque côté de la périphérie (1d') en dessous de la sortie de boisson (1'").

3. Machine selon la revendication 1 ou 2, dans laquelle le ou les éléments élastiques hydrofuges (1d") s'étendent de manière ininterrompue sur chaque côté de la périphérie (1d') en dessous de la source liquide (15), par ex. ledit réservoir de liquide (15).

4. Machine selon une quelconque revendication précédente, dans laquelle le ou les éléments élastiques (1d") sont dans une configuration généralement continue s'étendant généralement le long de toute la périphérie (1d') ou au moins le long d'une partie prédominante de celle-ci, telle que s'étendant dans une configuration ininterrompue le long de toute la périphérie (1d').

5. Machine selon une quelconque revendication précédente, dans laquelle le ou les éléments élastiques (1d") à la périphérie (1d') du fond (1d) sont configurés pour espacer le fond (1d) de pas plus de 2 mm sur ladite surface externe de support (100) au niveau du ou des éléments élastiques (1d").

6. Machine selon la revendication 5, dans laquelle le ou les éléments élastiques (1d") à la périphérie (1d') du fond (1d) sont configurés pour espacer le fond (1d) de pas plus de 1, telle que pas plus de 0,5 mm.

7. Machine selon une quelconque revendication précédente, qui comprend une face externe (1b, 1c, 11, 1t, 1u, 1v, 1w, 1x) s'étendant le long de sensiblement toute la périphérie (1d') et formant :
- au moins un côté extrémal (1t, 1u), par ex. un côté avant (1t) et/ou un côté arrière (1u) ; et/ou
- au moins deux côtés latéraux (1v, 1w) s'étendant à partir du ou des côtés extrémaux (1t, 1u) ; et/ou
- au moins un côté supérieur (1x),
tel que des côtés latéraux et extrémaux et supérieurs (1t, 1u, 1v, 1w, 1x), le réservoir (15) et la sortie de boisson (1"') étant situés au niveau des mêmes ou des différents côtés extrémaux (1t, 1u) et le ou les éléments (1d") s'étendant depuis le dessous du ou des côtés extrémaux (1t, 1u) au niveau desquels le réservoir (15) et la sortie (1"') sont situés et s'étendant le long et sous les bords latéraux (1v, 1w) qui s'étendent à partir dudit ou desdits côtés extrémaux (1t, 1u), facultativement les côtés (1t, 1u, 1v, 1w, 1x) étant reliés les uns aux autres par des angles aigu ou rond :
- ledit angle rond ayant un rayon minimal d'au moins 5 mm, par ex. dans la plage de 10 à 50 mm ; et
- ledit angle aigu ayant un rayon maximum de 5 mm, par ex. dans la plage de 0,1 à 3 mm.

8. Machine selon une quelconque revendication précédente, qui comprend un support (11, 12) assemblé sur le corps (1') pour porter, comme source de liquide (15), ledit réservoir de liquide (15), le support (11, 12) étant mobile avec le réservoir de liquide (15) en tant qu'unité (10) vers l'intérieur dans le corps (1') dans une position de travail pour fournir du liquide à l'entrée de liquide (1") et vers l'extérieur à partir du corps (1') dans une position de service, telle qu'une position de service pour remplir le réservoir (15) de liquide et/ou nettoyer le réservoir (15), facultativement le réservoir de liquide (15) :
- étant amovible du support (11, 12) dans la position de service, la sortie (16) du réservoir de liquide (15) pouvant être déconnecté de l'entrée de liquide (1"), le réservoir (15) comprenant par exemple un connecteur (17) afin de fixer le réservoir au support (11, 12), tel qu'un connecteur (17) afin de fixer mécaniquement et/ou par voie magnétique le réservoir au support (11, 12), par ex. un connecteur (17) situé autour de la sortie (16) et espacée de celui-ci ; et/ou
- comprenant une poignée (18) pour lever le réservoir (15) et/ou pour utiliser un couvercle (19) du réservoir (15) entre une position ouverte et une fermée, facultativement la poignée (18) étant mobile, par ex. pivotant, dans une position pliée pour déplacer le support (11, 12) avec le réservoir (15) dans la position de travail et étant mobile, par ex. pivotant, dans une position déployée permettant de faciliter la préhension de la poignée lorsque le support (11, 12) avec le réservoir est dans la position de service.

9. Machine selon la revendication 8, qui comprend un bac à déchets (13) pour collecter les déchets, tels qu'un ingrédient résiduel depuis un conduit de fluide et/ou un liquide résiduel provenant du conduit de liquide, le bac à déchets (13) étant porté par le support (11, 12) de sorte que le support (11, 12) est mobile avec le réservoir de liquide (15) et le bac à déchets (13) en tant qu'unité (10) vers l'intérieur dans le corps (1') dans une position de travail pour recueillir des déchets et vers l'extérieur à partir du corps (1') dans une position de service pour vider le bac à déchets (13), par exemple dans le bac à déchets (13) étant :
- amovible du support (11, 12) dans la position de service ; et/ou
- situé adjacent au réservoir de liquide (15) lorsqu'il est porté par le support (11, 12), tel que situé entre le réservoir de liquide (15) et le corps (1') lorsque le support (11, 12) est dans la position de service.

10. Machine selon la revendication 8 ou 9, dans laquelle le support (11, 12) comprend un élément de maintien (12) maintenant le réservoir (15), et facultativement un ou ledit bac à déchets (13), l'élément de maintien (12) étant par exemple généralement en forme de bras se déplaçant, par ex. coulissant, vers l'intérieur dans et vers l'extérieur depuis le corps de la machine (1').

11. Machine selon l'une des revendications 8 à 10, dans laquelle l'entrée de liquide (1") du conduit de liquide (1", 1"') du corps est fixée au support (11, 12), comme sur un ou ledit élément de maintien (12) maintenant le réservoir (15), et est mobile avec le support (11, 12).

12. Machine selon l'une quelconque des revendications 8 à 11, dans laquelle le corps (1') :
- délimite un siège (1a), par ex. une cavité (1a), pour recevoir l'unité (10) en position de travail, facultativement le support (11, 12) comprenant un panneau ou une paroi externe (11) pour recouvrir le siège (1a) dans la position de travail ; et/ou
- comprend un boîtier extérieur principal (1b), le support, par ex. un ou ledit panneau ou une ou ladite paroi externe (11), étant généralement affleurant au boîtier extérieur (1b) dans la position de travail.

13. Machine selon une quelconque revendication précédente, dans laquelle le corps (1') possède une entrée d'ingrédient (1e) pour alimenter le conduit de fluide (1", 1'"), par ex. vers une chambre de mélange comprise dans le conduit de fluide, un ingrédient aromatisant, par ex. un ingrédient aromatisant fourni à l'intérieur d'une capsule (2), facultativement une telle machine (1) comprenant une porte de fourniture d'ingrédient (1e') qui a une configuration ouverte pour permettre un transfert de l'ingrédient aromatisant le long de l'entrée d'ingrédient (1e) vers le conduit de fluide (1", 1'") et une configuration fermée pour empêcher le transfert de l'ingrédient aromatisant le long de l'entrée d'ingrédient (1e) vers le conduit de fluide (1", 1'"), par exemple la porte comprenant un obstacle (1e'), tel qu'une ou plusieurs portes coulissantes et/ou basculantes, déployé à travers l'entrée d'ingrédient (1e) dans la configuration fermée et au moins partiellement rétracté à travers l'entrée d'ingrédient (1e) dans la configuration ouverte, ledit obstacle formant typiquement un dispositif de maintien d'ingrédient, par ex. un dispositif de maintien de capsule d'ingrédient, pour maintenir ledit ingrédient avant le transfert vers le conduit de fluide (1", 1'").

14. Machine selon une quelconque revendication précédente, dans laquelle la sortie de boisson (1''') est montée dans une tête de sortie (1c') du corps (1') qui est escamotable dans une position de repos et déployable dans une position de distribution de boisson, la tête de sortie (1c') ayant facultativement un panneau ou une paroi externe (1c) qui est généralement affleurant avec un ou ledit boîtier extérieur principal (1b) du corps (1').

15. Machine selon une quelconque revendication précédente, qui comprend une face extérieure (1b, 1c, 11, 1t, 1u, 1v, 1w, 1x) qui est visible par l'utilisateur lorsque ladite machine (1) est placée sur le fond (1d), la face extérieure (1b, 1c, 11, 1t, 1u, 1v, 1w, 1x) s'étendant le long de sensiblement toute la périphérie (1d'), par exemple la face extérieure (1b, 1c, 11, 1t, 1u, 1v, 1w, 1x) :
- délimitant une ouverture d'une entrée de corps (1e) pour une fourniture au conduit de fluide (1", 1'"), par ex. une chambre de mélange comprise dans le conduit de fluide, un ingrédient aromatisant, par ex. un ingrédient aromatisant fourni à l'intérieur d'une capsule (2) au conduit de fluide ;
- s'étendant sur l'ensemble du corps (1') de la périphérie (1d') du fond (1d) vers l'ouverture de l'entrée de corps (1e) sur le fond pour confiner le corps (1') ; et
- ayant des bords saillants vers l'extérieur (1t, 1u', 1v', 1x', 1x"),
le corps (1') possédant un mode de travail pour entraîner le liquide depuis l'entrée (1") à la sortie (1'") et un mode d'inactivité lorsqu'une telle machine (1) est désactivée ou dans un mode veille, aucun bord saillant vers l'extérieur (1t', 1u', 1v', 1w', 1x") qui est visible par l'utilisateur dans le mode d'inactivité et qui est confiné dans la face extérieure (1b, 1c, 11, 1t, 1u, 1v, 1w, 1x), ayant un rayon de moins de 5 mm, tel qu'un rayon inférieur à 10 mm, par ex. un rayon inférieur à 20 mm, par exemple un rayon inférieur à 30 mm,
facultativement un ou plusieurs bords saillants vers l'extérieur (1v", 1w") délimités par la face extérieure (1b, 1c, 11, 1t, 1u, 1v, 1w, 1x) et le fond (1d) au niveau de la périphérie (1d') du fond (1d) et/ou un ou plusieurs bords saillants vers l'extérieur (1x"', 1x'") délimités par la face extérieure (1b, 1c, 11) et l'entrée de corps (1e) au niveau de l'ouverture de l'entrée de corps (1e) présentent des rayons inférieurs à 5 mm, par ex. dans la plage de 0,1 à 3 mm
